# EUROPÄISCHE PATENTSCHRIFT

(11) **EP 0 458 143 B1**
(45) Veröffentlichungstag und Bekanntmachung des Hinweises auf die Patenterteilung: **01.06.1994**
(21) Anmeldenummer: 91107583.6
(22) Anmeldetag: 10.05.1991
(51) Int. Cl.: F16K 17/04, F16K 24/04

(54) **Sicherheitsabsperrventil, insbesondere für Gas-Druckregelanlagen**
Shut-off safety valve, especially for gas pressure control installations
Soupape d'arrêt de sûreté, notamment pour installations de réglage de la pression de gaz

(30) Priorität: 25.05.1990 DE 4016925
(43) Veröffentlichungstag der Anmeldung: 27.11.1991
(73) Patentinhaber: Regel + Messtechnik GmbH Regler- und Anlagenbau für Gas-Druckreglung, D-34123 Kassel (DE)
(72) Erfinder: Fischer,Rudolf Dipl.-Ing, W-3500 Kassel (DE); Gärtner,Josef, W-3501 Söhrewald (DE)
(74) Vertreter: Walther, Horst, Dipl.-Ing.

(56) Entgegenhaltungen:
- DE-A- 2 442 023
- DE-A- 2 658 988
- DE-U- 7 238 312
- US-A- 2 888 035
- US-A- 3 001 550

## Beschreibung

Die Erfindung betrifft ein Sicherheitsabsperrventil, insbesondere für Gas-Druckregelanlagen, mit einem Stellglied und einem Kontrollgerät mit einer Meßmembran, wobei die Unterseite der Meßmembran durch eine Meßleitung mit dem zu überwachenden Druck beaufschlagt wird, und die Oberseite der Meßmembran durch eine Atmungsleitung mit der Atmosphäre in Verbindung steht.

Ein Sicherheitsabsperrventil der eingangs genannten Art ist aus der DE-A-26 58 988 bekannt. In diesem Sicherheitsabsperrventil befindet sich ein Kontrollgerät, das eine Vergleichermembran und ein Kugelrastgesperre aufweist. Durch das Kugelrastgesperre wird bei Vorliegen bestimmter äußerer Bedingungen das Stellglied des Sicherheitsabsperrventiles in Geschlossenstellung gebracht. Die äußeren Bedingungen, die zur Auslösung des Kugelrastgesperres führen, sind einerseits der zu beiden Seiten der Vergleichermembran herrschende Druck, und andererseits die Kraft der beiden Sollwertfedern, die bei Überdruck bzw. Druckmangel über eine Schaltbuchse die Auslösung des Kugelrastgesperres bewirken. Die Funktionsweise des Kontrollgerätes stellt sich wie folgt dar: Überschreitet der zu überwachende Druck mit dem die Vergleichermembran von unten beaufschlagt wird, einen bestimmten Wert, so wird die Schaltbuchse entgegen der Kraft der äußeren der beiden konzentrisch zueinander, ineinander gelagerten Federn nach oben gedrückt und so das Kugelrastgesperre entriegelt; bei Druckmangel hingegen wird zur Entriegelung des Kugelrastgesperres die Schaltbuchse durch die innere der beiden Federn nach unten gedrückt.

Das Sicherheitsabsperrventil spricht aber auch dann an, wenn beispielsweise ein Membranbruch auftritt, der unmittelbar zu einem Druckausgleich auf beiden Seiten der Vergleichermembran führt. Die Auslösung des Kugelrastgesperres und damit des Stellgliedes, erfolgt hierbei durch die innere der beiden Federn, da der Druckausgleich einer Druckmangelsituation entspricht.

Weist hingegen die Vergleichermembran nur geringfügige Beschädigungen auf, d.h. ist der Druckausgleich zu beiden Seiten der Vergleichermembran derart gering, daß der zu überwachende Druck unterhalb der Vergleichermembran noch so hoch ist, daß er der Kraft der inneren Feder Stand hält, so kann das Sicherheitsabsperrventil nicht in Funktion treten. D.h. über die Atmungsleitung wird in diesem Fall kontinuierlich eine geringe Menge des zu überwachenden Mediums nach außen an die Umgebung abgegeben.

Darüber hinaus sind Schaltventile bekannt, welche als Rückschlagventile ausgebildet sind (z.B. (US-A-2888035, DE-U-7238312).

Auch ist bekannt, einen Gasdruckregler mit einem oberhalb der Meßmembran befindlichen Raum zu versehen, der durch eine verschließbare Öffnung mit der Atmosphäre in Verbindung gebracht werden kann (DE-A-2442 023).

Der Erfindung liegt daher die Aufgabe zugrunde, ein Sicherheitsabsperrventil der eingangs genannten Art derart weiterzubilden, daß das Absperrventil selbst bei geringfügigen Beschädigungen der Vergleichermembran seine Funktion ausüben kann.

Die Aufgabe wird erfindungsgemäß dadurch gelöst, daß die Atmungsleitung mit einem Schaltventil zum Abschalten der Atmungsleitung bei Druckerhöhung auf der Oberseite der Meßmembran versehen ist, dessen Ventilteller im Durchmesser kleiner ist als der Durchmesser der Aufnahmebohrung für den Ventilteller des Gehäuses des Schaltventiles, so daß sich zwischen dem Ventilteller und der Aufnahmebohrung ein Ringspalt ergibt. Der Ventilteller ist dabei einerseits mittels eines Sicherheitsringes im Gehäuse gehalten und andererseits mittels einer Feder im Gehäuse abgestützt. Durch die Wahl der Kraft der Feder kann der Ansprechdruck des Schaltventils entsprechend eingestellt werden.

Der Sicherheitsring selbst weist zur Bildung eines axialen Abstandes zum Ventilteller Abstandhalter auf. Hierfür kann der Sicherheitsring mit nach innen liegenden Krampen ausgebildet sein.

Sobald sich in dem Raum der oberhalb der Vergleichermembran ein - wenn auch nur geringer Druck aufbaut - wird das Schaltventil geschlossen. Mit dem Schließen des Schaltventils wird automatisch durch den sich einstellenden Druckausgleich - vergleichbar mit einer Druckmangelsituation - durch die innere Feder die Schaltbuchse nach unten bewegt, mithin das Kugelrastgesperre entriegelt, wodurch das Stellglied in Geschlossenstellung gebracht wird.

Die Beatmung des oberhalb der Vergleichermembran befindlichen Raumes erfolgt durch den zwischen Ventilteller und Sicherungsring aufgrund der Abstandhalter gebildeten ringförmigen Fläche, dem sich daran anschließenden Ringspalt, der aufgrund des Unterschieds des Durchmessers des Ventiltellers und dem der Aufnahmebohrung gebildet wird, sowie nachfolgend dem axialen Abstand zwischen der Fläche des Ventilteller und der Auflagefläche für den Ventilteller im Gehäuse, der durch die Kraft der den Ventilteller gegen das Gehäuse abstützenden Feder gebildet wird.

Um sicherzustellen, daß das Schaltventil anspricht und das Stellglied des Sicherheitsabsperrventil ausgelöst wird, müssen bezüglich der Dimensionierung des Schaltventiles bestimmte Anforderungen erfüllt sein; so muß der Querschnitt des Ringspaltes kleiner oder gleich dem kleinsten Querschnitt der Meßleitung sein und es muß der Querschnitt des Ringspaltes kleiner sein als der kleinste Querschnitt einer dem Ventilteller nachgeordneten Bohrung im Schaltventil bzw. in der Atmungsleitung.

Der erfindungsgemäße Gegenstand ist in der Zeichnung in einer beispielsweisen Ausführungsform dargestellt.
- Fig. 1: zeigt das komplette Sicherheitsabsperrventil in einer Seitenansicht im Schnitt;
- Fig. 2: zeigt das Schaltventil in einer Seitenansicht im Schnitt.

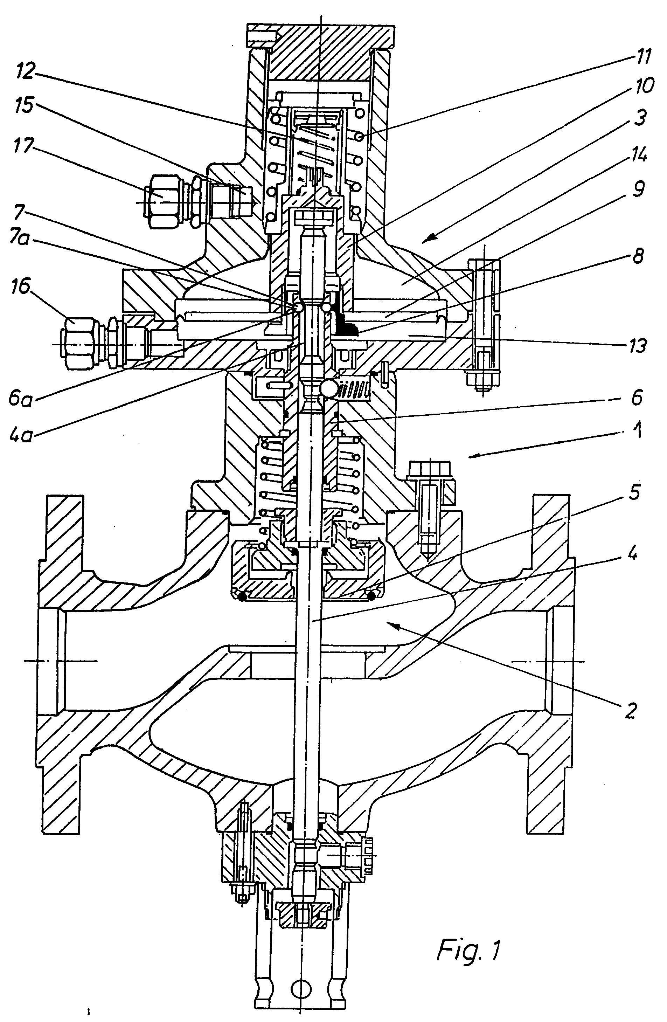

Gemäß Fig. 1 besteht das insgesamt mit 1 bezeichnete Sicherheitsabsperrventil aus dem Stellglied 2 und dem insgesamt mit 3 bezeichneten Kontrollgerät. Das Stellglied 2 besteht aus dem Ventilteller 5 und der Schaltstange 4. Die Schaltstange 4 ist in der Führungsbuchse 6 geführt. Die Führungsbuchse 6 besitzt an ihrem oberen Ende mehrere Bohrungen zur Aufnahme der Kugeln 7a des Kugelrastgesperres 7. Dieses Kugelrastgesperre 7 weist außer den Kugeln 7a noch die Schaltbuchse 8 auf. Diese Schaltbuchse 8 ist baulich verbunden mit der Vergleichermembran 9 einerseits und einem Übertragungselement 10 andererseits, auf das die beiden Sollwertfedern 11 und 12 wirken. Der Raum 13 unterhalb der Vergleichermembran 9 wird über die Meßleitung 16 mit dem zu überwachenden Druck beaufschlagt. Der Raum 14 oberhalb der Vergleichermembran ist durch die Atmungsleitung 15 mit der Atmosphäre verbunden. In der Atmungsleitung 15 befindet sich das Schaltventil 17. Die Funktionsweise des Kontrollgerätes 3 stellt sich wie folgt dar:

Bei einem in dem Raum 13 entstehenden Überdruck wird das Kugelrastgesperre 7 dadurch ausgelöst, daß die Vergleichermembran 9 und die Schaltbuchse 8 nach oben entgegen der Kraft der Sollwertfeder 11, mit der die Schaltbuchse 8 über das Übertragungselement 10 in Verbindung steht, bewegt werden. Bei Druckmangel, d.h. auch bei gleichen Drücken in den Räumen 13 und 14, wird die Schaltbuchse 8 über das Übertragungselement 10 durch die Kraft der Sollwertfeder 12 nach unten bewegt, wodurch das Kugelrastgesperre 7 ebenfalls ausgelöst wird. Hieraus ergibt sich, daß das Sicherheitsabsperrventil immer dann ausgelöst wird, wenn beispielsweise durch einen plötzlichen Membranbruch der Vergleichermembran 9 ein Druckausgleich in den Räumen 13 und 14 stattfindet, mithin ein sogenannter Druckmangel entsteht.

Ergibt sich jedoch durch einen geringfügigen Membrandefekt lediglich ein geringer bleibender Druckaufbau im oberen Membranraum 14, der nicht unmittelbar zu einem Druckausgleich in den beiden Räumen und damit zu einer Druckmangel-Abschaltung führt, so wird zur Erzeugung eines Druckmangels durch das Schaltventil 17 die Atmungsleitung verschlossen, mit der Folge, daß dann bei Druckausgleich das Sicherheitsabsperrventil in Funktion tritt.

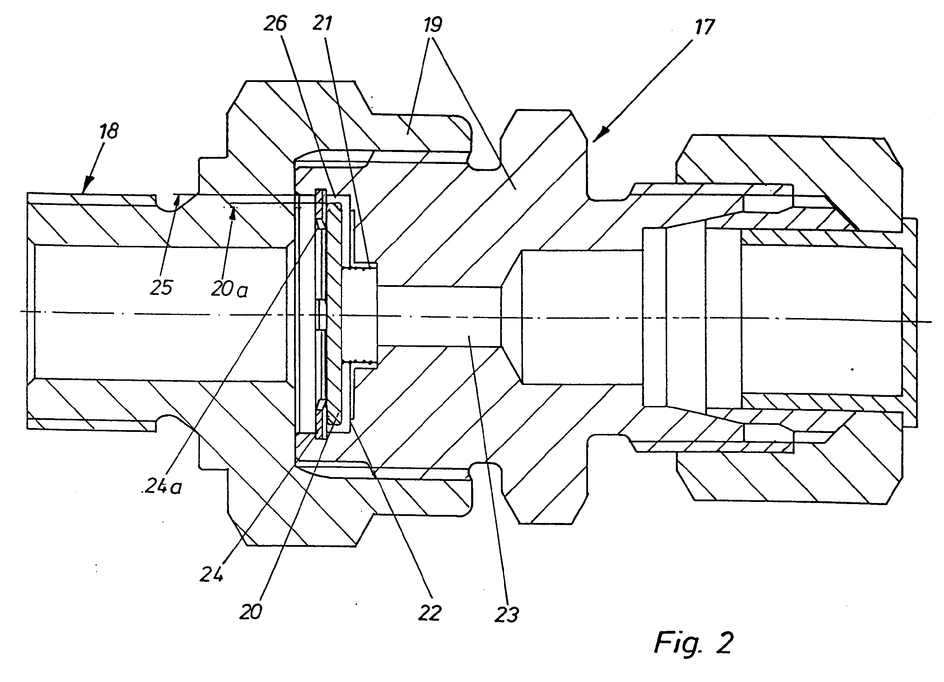

Das in Fig. 2 dargestellte Schaltventil 17 ragt mit seinem einen Ende 18 in die Atmungsleitung 15 des Kontrollgerätes 3 hinein. Dieses Schaltventil besteht aus dem Gehäuse 19, dem Ventilteller 20 und der Öffnungsfeder 21. Im Gehäuse 19 sind der Ventilsitz 22 und die Atmungsbohrung 23 angeordnet. Zur Fixierung des Ventiltellers 20 ist der Sicherungsring 24 vorgesehen. Der Sicherungsring 24 weist Abstandshalter in Form von Krampen 24a auf, wodurch ein axialer Abstand zwischen Sicherungsring 24 und Ventilteller 20 erzeugt wird.

Der Ventilteller 20 ist bezüglich seines Durchmessers 20a um einen definierten Betrag kleiner ausgeführt als der Durchmesser der Aufnahmebohrung 25 für den Ventilsitz 22, so daß sich hier ein radialer Spalt in Form eines Ringspaltes 26 zwischen dem Durchmesser 24a des Ventiltellers und dem Durchmesser 25 der Aufnahmebohrung für den Ventilteller ergibt.

Ein ebenfalls axialer Spalt zwischen Ventilteller 20 und Ventilsitz 22 wird durch die Kraft der auf den Ventilteller 20 wirkenden Öffnungsfeder 21 gebildet. Im normalen Betriebszustand erfolgt die Beatmung des Membranraumes 14 durch den zwischen dem Sicherungsring 24 und dem Ventilteller 20 bestehenden axialen Spalt, durch den Ringspalt 26 und dem axialen Spalt zwischen Ventilsitz 22 und Ventilteller 20.

Ergibt sich ein Membrandefekt an der Vergleichermembran 9, und führt dies zu einem geringen bleibenden Druckaufbau im oberen Membranraum 14, so wirkt dieser Druck auch auf den Ventilteller 20 und erzeugt eine Kraft, die gegen die der Öffnungsfeder 21 wirkt. Übersteigt die auf den Ventilteller wirkende Kraft aufgrund des Druckaufbaues im oberen Membranraum 14 die Kraft der Öffnungsfeder 21, wird der Ventilteller 20 gegen den Ventilsitz 22 gedrückt und somit die Beatmung des Membranraumes 14 weitgehend unterbunden. Es kommt nunmehr zu einem Druckausgleich, d.h. der Druck im Membranraum 13 und der im Membranraum 14 gleichen sich an; dies entspricht einer Druckmangelsituation; das Sicherheitsabsperrventil wird ausgelöst und sperrt die Gaszufuhr ab.

## Patentansprüche

1. Sicherheitsabsperrventil, insbesondere für Gas-Druckregelanlagen, mit einem Stellglied (2) und einem Kontrollgerät (3) mit einer Meßmembran (9), wobei die Unterseite der Meßmembran (9) durch eine Meßleitung (16) mit dem zu überwachenden Druck beaufschlagt wird, und die Oberseite der Meßmembran (9) durch eine Atmungsleitung (15) mit der Atmosphäre in Verbindung steht,
**dadurch gekennzeichnet**, daß
die Atmungsleitung (15) mit einem Schaltventil (17) zum Abschalten der Atmungsleitung (15) bei Druckerhöhung auf der Oberseite der Meßmembran versehen ist, dessen Ventilteller (20) im Durchmesser (20a) kleiner ist als der Durchmesser der Aufnahmebohrung (25) für den Ventilteller (20) des Gehäuses (19) des Schaltventiles (17), so daß sich zwischen dem Ventilteller (20) und der Aufnahmebohrung (25) ein Ringspalt (26) ergibt.

2. Sicherheitsabsperrventil nach Anspruch 1,
**dadurch gekennzeichnet**, daß
der Ventilteller (20) einerseits mittels einer Öffnungsfeder (21) gegen den Ventilsitz (22) des Gehäuses(19) abgestützt ist und andererseits mittels eines Sicherungsringes (24) gehalten ist.

3. Sicherheitsansperrventil nach Anspruch 2,
**dadurch gekennzeichnet,** daß
der Sicherungsring (24) Abstandshalter (24a) zur Bildung eines axialen Abstandes zum Ventilteller (20) aufweist.

4. Sicherheitsabsperrventil nach Anspruch 2,
**dadurch gekennzeichnet**, daß
der Querschnitt des Ringspaltes (26) kleiner oder gleich dem kleinsten Querschnitt in der Meßleitung (16) ist.

5. Sicherheitsabsperrventil nach Anspruch 2,
**dadurch gekennzeichnet**, daß
der Querschnitt des Ringspaltes (26) kleiner als der kleinste Querschnitt einer dem Ventilteller (20) nachgeordneten Bohrung (23) im Schaltventil (17) bzw. in der nachgeordneten Atmungsleitung (15) ist.

## Claims

1. Safety shut-off valve, especially for gas pressure regulating installations, with a setting member (2) and a checking apparatus (3) with a measuring diaphragm (9), wherein the lower side of the measuring diaphragm (9) is loaded by way of a measuring duct (16) with the pressure to be monitored and the upper side of the measuring diaphragm (9) stands in connection with the atmosphere by way of a breather duct (15), characterised thereby that the breather duct (15) is provided at the upper side of the measuring diaphragm with a switching valve (17) for the switching off of the breather duct (15) in the case of pressure increase, the valve plate (20) of which valve is smaller in diameter (20a) than the diameter of the receiving bore (25), for which is for the valve plate (20), of the housing (19) of the switching valve (17), so that an annular gap (26) results between the valve plate (20) and the receiving bore (25).

2. Safety shut-off valve according to claim 1, characterised thereby that the valve plate (20) is at one side supported against the valve seat (22) of the housing (19) by means of an opening spring (21) and at the other side retained by means of a securing ring (24).

3. Safety shut-off valve accordihg to claim 2, characterised thereby that the securing ring (24) has a spacer (24a) for the formation of an axial spacing relative to the valve plate (20).

4. Safety shut-off valve according to claim 2, characterised thereby that the cross-section of the annular gap (26) is smaller than or equal to the smallest cross-section in the measuring duct (16).

5. Safety shut-off valve according to claim 2, characterised thereby that the cross-section of the annular gap (26) is smaller than the smallest cross-section of a bore (23), which is arranged downstream of the valve plate (20), in the switching valve (17) or in the downstream breather duct (15).

## Revendications

1. Soupape d'arrêt de sûreté, notamment pour des installations de réglage de pression de gaz, comportant un organe de réglage (2) et un appareil de contrôle (3) pourvu d'une membrane de mesure (9), où le côté inférieur de la membrane de mesure (9) est sollicité par la pression à surveiller à travers un conduit de mesure (16), et le côté supérieur de la membrane de mesure (9) est en communication avec l'atmosphère à travers un conduit de respiration (15),
**caractérisée** en ce que le conduit de respiration (15) est pourvu d'une soupape de commande (17) pour bloquer le conduit de respiration (15) en cas d'élévation de pression sur le côté supérieur de la membrane de mesure, la soupape de commande ayant un plateau (20) dont le diamètre (20a) est plus petit que le diamètre de l'alésage (25) contenant ledit plateau (20) dans le corps (19) de la soupape de commande (17), de sorte qu'il y a un intervalle annulaire (26) entre ledit plateau (20) et ledit alésage (25).

2. Soupape d'arrêt de sûreté selon la revendication 1, **caractérisée** en ce que le plateau de soupape (20) est appuyé d'un côté en face du siège de soupape (22) du corps (19) au moyen d'un ressort d'ouverture (21) et est retenu de l'autre côté au moyen d'un circlip (24).

3. Soupape d'arrêt de sûreté selon la revendication 2, **caractérisée** en ce que le circlip (24) comporte des éléments écarteurs (24a) pour ménager un écart axial par rapport au plateau de soupape (20).

4. Soupape d'arrêt de sûreté selon la revendication 2, **caractérisée** en ce que la section transversale de l'intervalle annulaire (26) est inférieure ou égale à la plus petite section transversale du conduit de mesure (16).

5. Soupape d'arrêt de sûreté selon la revendication 2, **caractérisée** en ce que la section transversale de l'intervalle annulaire (26) est inférieure à la plus petite section transversale d'un alésage (23) disposé à la suite du plateau de soupape (20) dans la soupape de commande (17) ou dans la suite du conduit de respiration (15).
